# EUROPEAN PATENT SPECIFICATION

(11) **EP 2 721 981 B1**
(45) Date of publication and mention of the grant of the patent: **31.05.2017**
(21) Application number: 13187849.8
(22) Date of filing: 09.10.2013
(51) Int. Cl.: B26D 3/26, B26D 7/00, B26D 3/28

(54) **Cutting device for fruits and vegetables**
Schneidevorrichtung für Obst und Gemüse
Dispositif de coupe pour fruits et légumes

(30) Priority: 19.10.2012 HK 12110457
(43) Date of publication of application: 23.04.2014
(73) Proprietor: Wong, Yan Kwong, Kowloon, Hong Kong (CN)
(72) Inventor: Wong, Yan Kwong, Kowloon, Hong Kong (CN)
(74) Representative: Cabinet Chaillot

(56) References cited:
- DE-C- 605 399
- DE-U1- 29 612 341
- JP-U- 3 139 849
- US-A1- 2004 217 219
- US-A1- 2012 085 850

## Description

### Technical Field

The present invention relates to a fruit and vegetable processing device. Specifically, the present invention relates to a cutting device for fruits and vegetables.

### Background of the Invention

Vegetables and fruits before cooking are usually cut into bars or pieces. For some vegetables and fruits, many inconveniences exist while directly cutting via a knife. Therefore, a special vegetable and fruit cutter is needed to process the vegetables and fruits. For example, US patent application US 2004/217219A1 discloses a food grater comprising a grater blade including multiple grating teeth, a detachable base including a food storage cavity, a pad attached to the base and a latching member for attaching the grater blade to the base which may be grapsed by hand. The processed vegetables and fruits are hold in a container. However, many inconveniences exist in assembling and disassembling between a cover having a cutting device and a container, which are not beneficial for cleaning and taking out the vegetables and fruits.

### Summary of the Invention

The technical problem to be solved in the present invention is that the cutting device of existing technology is not able to mount the cutting component to the container. Another technical problem to be solved in the present invention is to provide a washable and anti-rusting cutting device for fruits and vegetables.

The present invention relates to a cutting device for fruits and vegetables, comprising a container, a cover, a cutting member mounted to said cover, said container comprises a container aperture, said cover is removably mounted on said container aperture, two opposing extending structures being extended outwardly from the outer edge of said container aperture forms first and second locking extensions, said cover comprises a locking hook and a locking device adapted for allowing said cover to mount on said container and receiving said first and second locking extensions, said locking device comprises a sliding member and an elastic member, said sliding member is adapted for mounting said cover to said container through sliding motion of said sliding member along the radius of said container aperture.

Typically, said sliding member adapted for restricting said second locking extension in a position between said cover and said sliding member is removably mounted on a side of said second locking extension, said second locking extension is adapted to be released from the position between said cover and said sliding member through an outward motion of said sliding member from said container,

Typically, said elastic member is adapted for restricting outwardly sliding motion of said sliding member from said container.

Typically, a ring shape extension is adapted to be defined by an extending structure extending outwardly from outer edge of said container aperture, said ring shape extension comprises first and second locking extensions being formed from two opposing portions of said ring shape extension.

Typically, said first and second locking extensions are of substantially the same shape, said container aperture is of quadrilateral shape.

Typically, a cover ring shape convex member adapted for being received by inner wall of said container aperture is extended from a side of said cover towards said container, said ring shape convex member comprises a concave region which is in the corresponding position with the position of said locking hook.

Typically, said elastic member is of arch shape, two ends of said elastic member is mounted to said cover, the center portion of said elastic member being projected towards the outer wall of said container is mounted to said sliding member.

Typically, a portion of said sliding member which is extended along said cover forms sliding member extension, said sliding member extension is adapted for receiving and mounting to a center portion of said elastic member.

Typically, a portion of said sliding member which is extended along said cover forms two opposing sliding locking hooks, two longitudinal sliding locking hook receivers adapted for receiving said two opposing sliding locking hooks are mounted on said cover, said sliding locking hook is slidingly mounted inside said longitudinal sliding locking hook receiver.

Typically, a portion of said sliding member which is extended towards the outer wall of said container forms a locking position member which is mounted on a side of said second locking extension distal to said cover.

Typically, a portion of said locking position member which is extended towards said cover forms a locking extension member, said locking extension member comprises an inclined surface adapted for receiving said second locking extension, said inclined surface is arranged between said sliding member and said cover.

Typically, said first and second locking extensions are arranged axially in a substantially opposite position of said container.

Typically, said cover comprises a plurality of apertures, a center portion of said elastic member comprises a convex biasing element.

Typically, said elastic member comprises Acetal.

Typically, said sliding member comprises a sliding position member adapted for controlling the direction of motion of said sliding member along a surface of said cover, a sliding position member receiver is arranged on a surface of said sliding member corresponding to said cover, said sliding position member is adapted for moving along said sliding position member receiver.

### Description of the Drawings

This and other objects, features and advantages of the present invention will become apparent upon reading of the following detailed descriptions and drawings, in which:
FIG. 1 is an assembly drawing of an embodiment of the present invention;
FIG. 2 is a schematic diagram of FIG. 1;
FIG. 3 is a schematic diagram of the cover of FIG. 1;
FIG. 4 and FIG. 5 are schematic diagrams showing the relationship between the cover and the container of FIG. 1;
FIG. 6 is a schematic diagram of the elastic member of FIG. 1;
FIG. 7 is a schematic diagram showing the relationship between the locking device and the cover of FIG. 1;
FIG. 8 is a schematic diagram of the sliding member of FIG. 1; and
FIG. 9 is an alternative schematic diagram of the sliding member of FIG. 8.

### Detailed Description of the Embodiment

The technical solutions in the embodiment of the present invention will be clearly and completely described with reference to the attached drawings in the embodiment of the present invention.

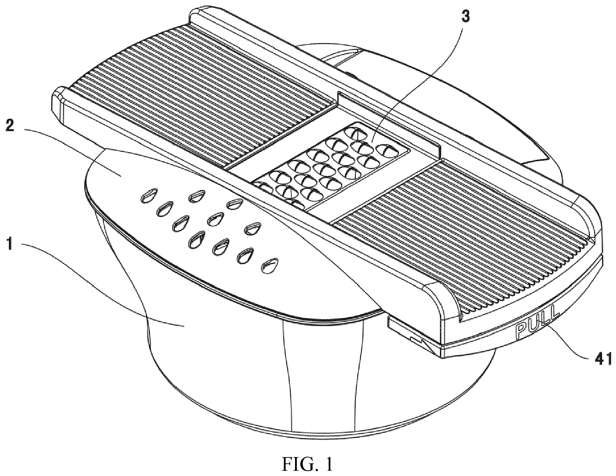

As shown in FIGs 1 to 2, a cutting device for vegetables and fruits according to the embodiment of the present invention comprises a container 1 for storing vegetables and fruits after being cut, a cover 2 and a cutting device arranged on the cover 2. The container 1 is provided with an open end or container aperture, and the cover 2 is arranged at the open end or container aperture of the container 1.

Edges of the outer wall of the open end or container aperture of the container 1 extend oppositely to form a first locking extension 11 and a second locking extension 12. The first locking extension 11 and the second locking extension 12 are arranged symmetrically to an axis of the container 1. A clamping hook or locking hook 21 and a locking device 4 respectively matched with the first locking extension 11 and the second locking extension 12 are arranged on the cover 2. In the embodiment, the edges of the outer wall of the open end or container aperture of the container 1 extend to form a ring flange or ring shape extension 10, and two parts of the ring flange or ring shape extension 10 which are axially symmetrical respectively form the first locking extension 11 and the second locking extension 12. Preferably, the first locking extension 11 and the second locking extension 12 have same shape and structure; the open end or container aperture of the container 1 is a square structure or a quadrilateral shape; the cover while being rotated for 90 degrees may also be received and mounted with the open end or container aperture of the container 1, so that the cover 2 and the container 1 are convenient and quick to connect. For another embodiment at this portion, the open end or container aperture of the container 1 can further be a round structure; moreover, an external edge is provided with a ring flange or ring shape extension 10 along a circumferential direction; each part of the ring flange or ring shape extension 10 may be served as the first locking extension or the second locking extension, and the cover 2 can be received and mounted with the open end or container aperture of the container 1 even if the cover is rotated by any angle.

Preferably, the cover 2 is provided with a plurality of apertures so that liquid in the container 1 flows out of the cutting device via the apertures, thus being capable of draining residual liquid of the vegetables and fruits after being cut.

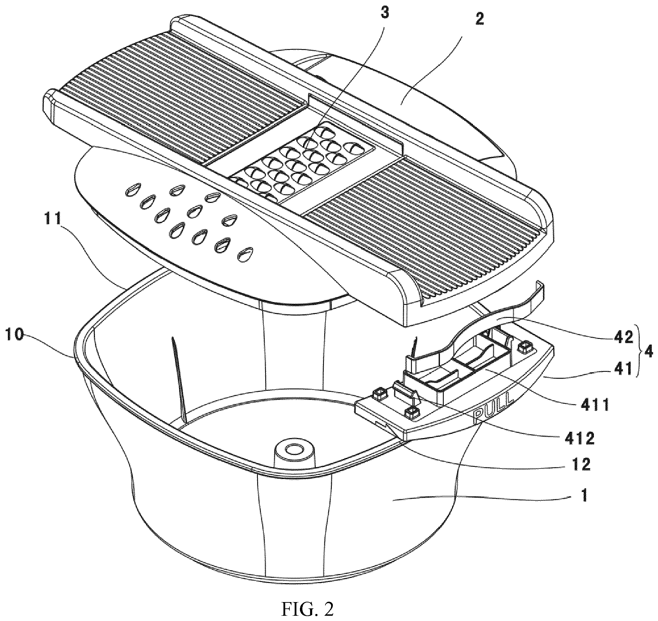

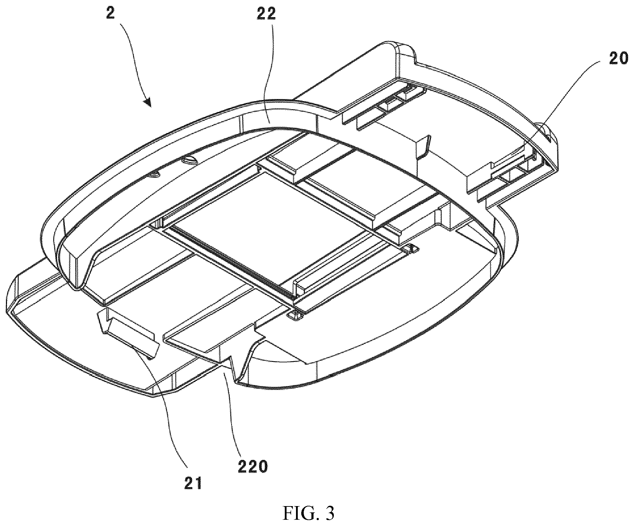

As shown in FIG. 3, the cover 2 extends towards the container 1 to form a ring shape convex member 22 adapted to be received with the inside shape of the open end or container aperture of the container 1, wherein a position of the ring shape convex member 22 corresponding to the clamping hook or locking hook 21 is provided with a gap or concave region 220 to facilitate match and connection between the clamping hook or locking hook 21 and the clamping edge or locking extension 11. The ring shape convex member 22 can be utilized for facilitating match and connection between the cover 2 and the container 1 and enabling the connection between the two more tightly. In the embodiment as illustrated in FIG. 2, the cover 2 is in a form of a grater. A cutting device 3 is arranged on the cover so as to cut the vegetables and fruits.

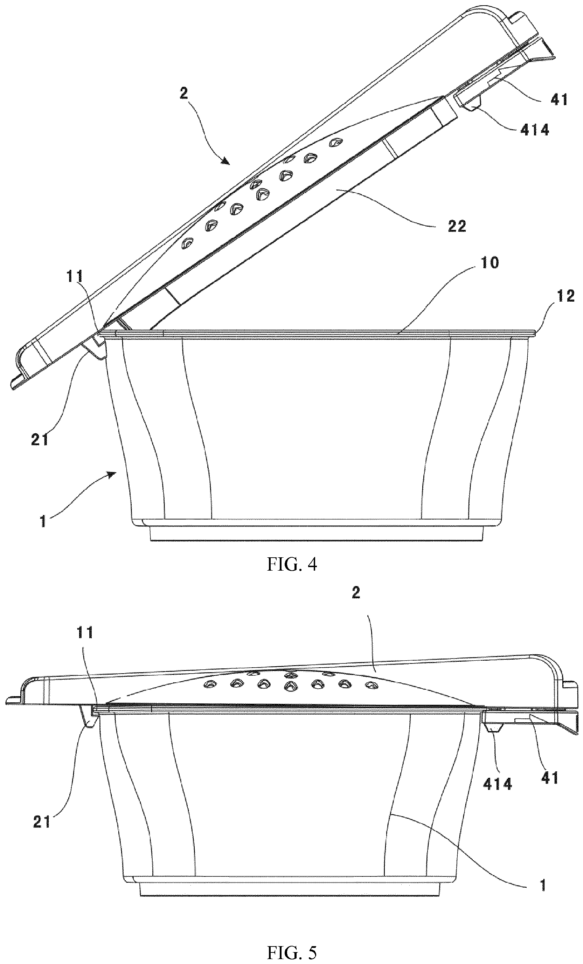

As shown in FIG. 2, the locking device 4 comprises a sliding member 41 and an elastic member 42. As shown in FIG. 4 and FIG. 5, the sliding member 41 is mounted with the cover 2 in a sliding way along a radial direction of the open end or container aperture of the container 1. The sliding member 41 is blocked at one side of the second locking extension 12 far from the open end or container aperture of the container 1 and limits the second locking extension 12 between the cover 2 and the sliding member 41. When the sliding member 41 slides to an external direction of the container 1, limitation of the sliding member on the second locking extension 12 is relieved. The elastic member 42 limits the sliding member41 to slide to the external direction of the container 1.

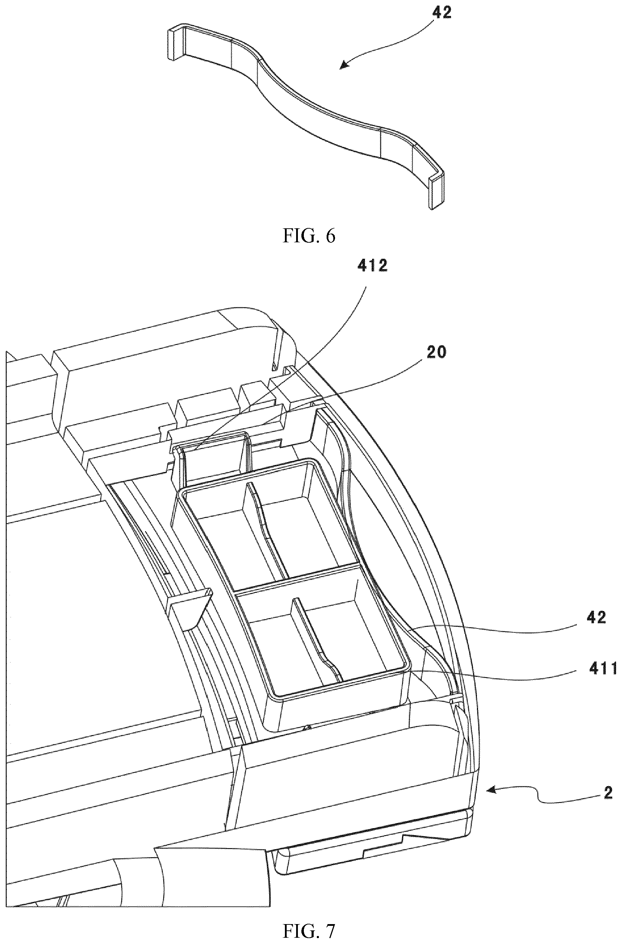

Preferably, the elastic member 42 as shown in FIG. 6 and FIG. 7 is made of plastic, wherein the plastic may be PP (Polypropylene) plastic or polyformaldehyde or Acetal (POM) and have a rebound resilience characteristic. The elastic member 42 may be in an arch shape; moreover, a middle portion of the elastic member 42 may be provided with a convex biasing element possessing a rebound resilience characteristic, wherein the two ends of the convex biasing element are fixedly mounted with the cover 2. The middle portion of the elastic member 42 extrudes towards the outer wall of the container 1 and leans against the sliding member 41; when the sliding member 41 slides to the external direction of the container 1, the middle portion of the elastic member 42 deforms to offer a reversed acting force to the sliding member 41. Further preferably, the elastic member 42 is formed by bending a plastic strip manufactured by PP (Propene Polymer) plastic or polyformaldehyde, and can avoid corrosion, have a function of preventing rusting and can prevent elastic failure. Assuredly, the elastic member 42 may further be formed by bending a metal strip, or the elastic member 42 is a compression spring arranged between the sliding member 41 and the cover 2.

Preferably, the sliding member 41 is provided with a sliding position member so as to control a moving direction of the sliding member 41 on the cover 2. The sliding position member is arranged on the surface of the sliding member 41 opposite to the cover 2. The surface of the cover 2 opposite to the sliding member 41 is provided with a locating slot or sliding position member receiver. The sliding position member can slide along the locating slot or sliding position member receiver.

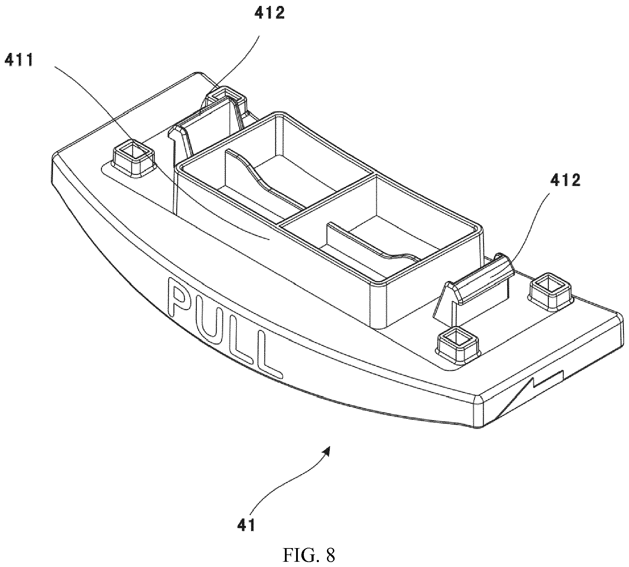

As shown in FIG. 7 and FIG. 8, the sliding member 41 extends towards the cover 2 to form a lug or sliding member extension 411 in view of offering convenience for match between the sliding member 41 and the elastic member 42. The lug or sliding member extension 411 is matched and mounted with the middle portion of the elastic member 42. The sliding member 41 extends towards the cover 2 to form two sliding clamping hook or locking hooks 412 which are symmetrically arranged. Two strip-type clamping slots 20 matched with the two sliding clamping hook or locking hooks 412 are respectively arranged on the cover 2. The sliding clamping hook or locking hooks 412 are located in the strip-type clamping slots 20 in a sliding way. The sliding member 41 and the cover 2 are mounted in a sliding way via match between the sliding clamping hook or locking hooks 412 and the strip-type clamping slots 20; moreover, the sliding member and the cover may not be separated. In the embodiment, the two sliding clamping hook or locking hooks 21 are respectively arranged at the two sides of the lug or sliding member extension 411.

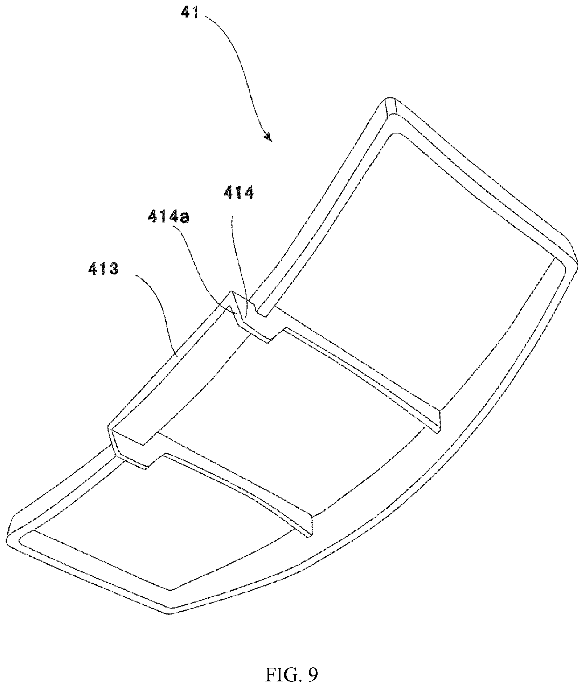

As shown in FIG. 9, the sliding member 41 extends towards the outer wall of the container 1 to form a clamping part or locking position member 413 blocked at one side of the second locking extension 12 far from the cover 2 in view of offering convenience for receiving between the sliding member 41 and the clamping edge or locking extension 12. The clamping part or locking position member 413 extends towards a direction distal from the cover 2 to form a linkage part or locking extension member 414. The linkage part or locking extension member 414 is provided with an inclined plane 414a for conveniently blocking the second locking extension 12 between the sliding member41 and the cover 2. To be more specific, the linkage part or locking extension member 414 is a trapezoidal plate, and the end surface of the inclined side of the linkage part is the inclined plane 414a. Preferably, two linkage parts or locking extension members 414 are arranged.

As shown in FIG. 4 and FIG. 5, the clamping hook or locking hooks 21 are received and mounted with the first locking extension 11 when the cover 2 is received and mounted with the container 1, then the other end of the cover 2 is rotated downwards. The second locking extension 12 acts on the inclined plane 414a of the linkage part or locking extension member 414 to enable the sliding member 41 to move towards a direction distal from the container 1. When the second locking extension 12 enters a gap or concave region between the clamping part or locking position member 413 of the sliding member41 and the cover 2, the sliding member 41 moves towards a direction close to the container 1 under the effect of the elastic member 42 so that the second locking extension 12 is limited between the clamping part or locking position member 413 and the cover 2 to complete connection between the cover 2 and the container 1. At this position, if the linkage part or locking extension member 414 is not arranged on the sliding member 41, the sliding member 41 may be driven manually to move towards a direction far from the container 1.

When separating the cover 2 from the container 1, the sliding member 41 is manually driven to move towards a direction far from the container to contact with the limitation on the second locking extension 12; then the cover 2 is rotated upwards, and finally the clamping hook or locking hooks 21 are separated from the first locking extension 11.

Preferably, the surface of the clamping hook or locking hook 21 opposite to the first locking extension 11 is provided with an inclined plane of the clamping hook or locking hook. A user may buckle the cover 2 onto the container 1 along a vertical direction under the match between the inclined plane of the clamping hook or locking hook and the inclined plane 414a.

## Claims

1. A cutting device for fruits and vegetables, comprising a container (1), a cover (2), a cutting member mounted to said cover (2), said container (1) comprises a container aperture, said cover (2) is removably mounted on said container aperture, two opposing extending structures being extended outwardly from the outer edge of said container aperture forms first and second locking extensions (11,12), said cover comprises a locking hook (21) and a locking device (4) adapted for allowing said cover (2) to mount on said container (1) and receiving said first and second locking extensions (11,12), **characterized in that** said locking device (4) comprises a sliding member (41) and an elastic member (42), said sliding member (41) is adapted for mounting said cover (2) to said container (1) through sliding motion of said sliding member (41) along the radius of said container aperture.

2. The cutting device for fruits and vegetables according to Claim 1, wherein said sliding member (41) adapted for restricting said second locking extension (12) in a position between said cover (2) and said sliding member (41) is removably mounted on a side of said second locking extension (12), said second locking extension (12) is adapted to be released from the position between said cover (2) and said sliding member (41) through an outward motion of said sliding member (41) from said container (1).

3. The cutting device for fruits and vegetables according to Claim 1, wherein said elastic member (42) is adapted for restricting outwardly sliding motion of said sliding member (41) from said container (1).

4. The cutting device for fruits and vegetables according to Claim 1, wherein a ring shape extension (10) is adapted to be defined by an extending structure extending outwardly from outer edge of said container aperture, said ring shape extension (10) comprises first and second locking extensions (11,12) being formed from two opposing portions of said ring shape extension (10).

5. The cutting device for fruits and vegetables according to Claim 1, wherein said first and second locking extensions (11,12) are of substantially the same shape, said container aperture is of quadrilateral shape.

6. The cutting device for fruits and vegetables according to Claim 1, wherein a cover ring shape convex member (22) adapted for being received by inner wall of said container aperture is extended from a side of said cover (2) towards said container (1), said ring shape convex member (22) comprises a concave region which is in the corresponding position with the position of said locking hook (21).

7. The cutting device for fruits and vegetables according to Claim 3, wherein said elastic member (42) is of arch shape, two ends of said elastic member (42) is mounted to said cover (2), the center portion of said elastic member (42) being projected towards the outer wall of said container (1) is mounted to said sliding member (41).

8. The cutting device for fruits and vegetables according to Claim 2, wherein a portion of said sliding member (41) which is extended along said cover (2) forms sliding member extension (411), said sliding member extension (411) is adapted for receiving and mounting to a center portion of said elastic member (42).

9. The cutting device for fruits and vegetables according to Claim 8, wherein a portion of said sliding member (41) which is extended along said cover (2) forms two opposing sliding locking hooks, two longitudinal sliding locking hook receivers adapted for receiving said two opposing sliding locking hooks (412) are mounted on said cover (2), said sliding locking hook is slidingly mounted inside said longitudinal sliding locking hook receiver.

10. The cutting device for fruits and vegetables according to Claim 2, wherein a portion of said sliding member (41) which is extended towards the outer wall of said container (2) forms a locking position member (413) which is mounted on a side of said second locking extension distal to said cover (2).

11. The cutting device for fruits and vegetables according to Claim 10, wherein a portion of said locking position member (413) which is extended towards said cover forms a locking extension member (414), said locking extension member (414) comprises an inclined surface adapted for receiving said second locking extension (12), said inclined surface is arranged between said sliding member (41) and said cover (2).

12. The cutting device for fruits and vegetables according to Claim 2, wherein said first and second locking extension (11,12) are arranged axially in a substantially opposite position of said container (1).

13. The cutting device for fruits and vegetables according to Claim 1, wherein said cover (2) comprises a plurality of apertures, a center portion of said elastic member (42) comprises a convex biasing element.

14. The cutting device for fruits and vegetables according to Claim 1, wherein said elastic member (42) comprises Acetal.

15. The cutting device for fruits and vegetables according to Claim 1, wherein said sliding member (41) comprises a sliding position member adapted for controlling the direction of motion of said sliding member (41) along a surface of said cover (2), a sliding position member receiver is arranged on a surface of said sliding member (41) corresponding to said cover (2), said sliding position member is adapted for moving along said sliding position member receiver.

## Patentansprüche

1. Schneidevorrichtung für Obst und Gemüse, mit einem Behälter (1), einem Deckel (2) und einem Schneideelement, das an den Deckel (2) montiert ist, wobei der Behälter (1) eine Behälteröffnung umfasst, wobei der Deckel (2) abnehmbar auf die Behälteröffnung montiert ist, wobei zwei gegenüberliegende Strukturen von der Außenkante der Behälteröffnung nach außen verlaufen und erste und zweite Arretieransätze (11, 12) bilden, wobei der Deckel einen Rasthaken (21) und eine Sperrvorrichtung (4) umfasst, damit der Deckel (2) auf den Behälter (1) montiert werden kann, und den ersten und den zweiten Arretieransatz (11,12) aufnimmt, **gekennzeichnet dadurch, dass** die Sperrvorrichtung (4) ein Gleitelement (41) und ein elastisches Element (42) umfasst, wobei das Gleitelement (41) angepasst ist, um den Deckel (2) an den Behälter (1) durch Gleitbewegung des Gleitelements (41) entlang dem Radius der Behälteröffnung zu montieren.

2. Schnittvorrichtung für Obst und Gemüse nach Anspruch 1, wobei besagtes Gleitelement (41), das angepasst ist, um den zweiten Arretieransatz (12) in einer Position zwischen dem Deckel (2) und dem Gleitelement (41) zu beschränken, abnehmbar an eine Seite des zweiten Arretieransatzes (12) montiert ist, wobei der zweite Arretieransatz (12) geeignet ist, aus der Position zwischen dem Deckel (2) und dem Gleitelement (41) durch eine Bewegung des Gleitelements (41) aus dem Behälter (1) heraus freigegeben zu werden.

3. Schneidevorrichtung für Obst und Gemüse nach Anspruch 1, wobei das elastische Element (42) angepasst ist, die Gleitbewegung des Gleitelements (41) aus dem Behälter (1) heraus zu beschränken.

4. Schneidevorrichtung für Obst und Gemüse nach Anspruch 1, wobei ein Ringansatz (10) von einem Ausleger definiert wird, der von der Außenkante der Behälteröffnung nach außen verläuft, wobei der Ringansatz (10) erste und zweite Arretieransätze (11, 12) umfasst, die von zwei gegenüberliegenden Teilen des Ringansatzes (10) gebildet werden.

5. Schneidevorrichtung für Obst und Gemüse nach Anspruch 1, wobei der erste und der zweite Arretieransatz (11, 12) im wesentlichen von derselben Form sind und die Behälteröffnung vierseitig ist.

6. Schneidevorrichtung für Obst und Gemüse nach Anspruch 1, wobei ein ringförmiges konvexes Deckelelement (22), das angepasst ist, um von der Innenwand der Behälteröffnung aufgenommen zu werden, von einer Seite des Deckels (2) zu dem Behälter (1) hin verläuft, wobei das ringförmige konvexe Element (22) einen konkaven Bereich umfasst, der in der der Position des Rasthakens (21) entsprechenden Position liegt.

7. Schneidevorrichtung für Obst und Gemüse nach Anspruch 3, wobei das elastische Element (42) Bogenform aufweist, wobei zwei Enden des elastischen Elements (42) an den Deckel (2) montiert sind und das Mittelteil des elastischen Elements (42), das zu der Außenwand des Behälters (1) hin vorsteht, an das Gleitelement (41) montiert ist.

8. Schneidevorrichtung für Obst und Gemüse nach Anspruch 2, wobei ein Teil des Gleitelements (41), das sich entlang dem Deckel (2) erstreckt, einen Gleitelementfortsatz (411) bildet, der zur Aufnahme von und Montage an ein Mittelteil des elastischen Elements (42) dient.

9. Schneidevorrichtung für Obst und Gemüse nach Anspruch 8, wobei ein Teil des Gleitelements (41), der sich entlang dem Deckel (2) erstreckt, zwei gegenüberliegende Gleit-Rasthaken bildet, wobei zwei Längs-Gleitrasthakenaufnahmen, die zur Aufnahme der beiden gegenüberliegenden Gleit-Rasthaken (412) dienen, auf den Deckel (2) montiert sind und der Gleitrasthaken gleitend in die Längs-Gleitrasthakenaufnahme montiert ist.

10. Schneidevorrichtung für Obst und Gemüse nach Anspruch 2, wobei ein Teil des Gleitelements (41), das sich zur Außenwand des Behälters (2) hin erstreckt, ein Blockierelement (413) bildet, das an einer Seite des zweiten Arretieransatzes distal zu dem Deckel (2) montiert ist.

11. Schneidevorrichtung für Obst und Gemüse nach Anspruch 10, wobei ein Teil des Blockierelements (413), das sich zu dem Deckel hin erstreckt, ein Arretieransatzelement (414) bildet, wobei das Arretieransatzelement (414) eine geneigte Oberfläche zur Aufnahme des zweiten Arretieransatzes (12) umfasst, wobei die geneigte Oberfläche zwischen dem Gleitelement (41) und dem Deckel (2) angebracht ist.

12. Schneidevorrichtung für Obst und Gemüse nach Anspruch 2, wobei der erste und zweite Arretieransatz (11, 12) axial in einer im wesentlichen gegenüberliegenden Position des Behälters (1) angeordnet sind.

13. Schneidevorrichtung für Obst und Gemüse nach Anspruch 1, wobei der Deckel (2) eine Vielzahl von Öffnungen umfasst und ein Mittelteil des elastischen Elements (42) ein konvexes Vorspannelement umfasst.

14. Schneidevorrichtung für Obst und Gemüse nach Anspruch 1, wobei das elastische Element (42) Azetal umfasst.

15. Schneidevorrichtung für Obst und Gemüse nach Anspruch 1, wobei das Gleitelement (41) ein Gleitpositionselement umfasst, das zur Steuerung der Bewegungsrichtung des Gleitelements (41) entlang einer Oberfläche des Deckels (2) dient, wobei eine Gleitpositionselementaufnahme auf einer Oberfläche des Gleitelements (41), die dem Deckel (2) entspricht, angebracht ist, wobei das Gleitpositionselement zum Bewegen entlang der Gleitpositionselementaufnahme vorgesehen ist.

## Revendications

1. Dispositif de coupe pour fruits et légumes, comprenant un récipient (1), un couvercle (2), un élément de coupe monté sur ledit couvercle (2), ledit récipient (1) comprend une ouverture de récipient, ledit couvercle (2) est monté de manière amovible sur ladite ouverture de récipient, deux structures d'extension opposées, qui s'étendent vers l'extérieur à partir du bord externe de ladite ouverture de récipient, forment des première et seconde extensions de verrouillage (11, 12), ledit couvercle comprend un crochet de verrouillage (21) et un dispositif de verrouillage (4) adaptés pour permettre audit couvercle (2) d'être monté sur ledit récipient (1) et recevoir lesdites première et seconde extensions de verrouillage (11, 12), **caractérisé par le fait que** ledit dispositif de verrouillage (4) comprend un élément coulissant (41) et un élément élastique (42), ledit élément coulissant (41) est adapté pour monter ledit couvercle (2) sur ledit récipient (1) par un mouvement de coulissement dudit élément coulissant (41) le long du rayon de ladite ouverture de récipient.

2. Dispositif de coupe pour fruits et légumes selon la revendication 1, dans lequel ledit élément coulissant (41) adapté pour limiter ladite seconde extension de verrouillage (12) dans une position entre ledit couvercle (2) et ledit élément coulissant (41) est monté de manière amovible sur un côté de ladite seconde extension de verrouillage (12), ladite seconde extension de verrouillage (12) est adaptée pour être libérée de la position entre ledit couvercle (2) et ledit élément coulissant (41) par un mouvement vers l'extérieur dudit élément coulissant (41) par rapport audit récipient (1).

3. Dispositif de coupe pour fruits et légumes selon la revendication 1, dans lequel ledit élément élastique (42) est adapté pour limiter un mouvement de coulissement vers l'extérieur dudit élément coulissant (41) par rapport audit récipient (1).

4. Dispositif de coupe pour fruits et légumes selon la revendication 1, dans lequel une extension de forme annulaire (10) est adaptée pour être définie par une structure d'extension s'étendant vers l'extérieur à partir du bord externe de ladite ouverture de récipient, ladite extension de forme annulaire (10) comprend des première et seconde extensions de verrouillage (11, 12) qui sont formées à partir de deux parties opposées de ladite extension de forme annulaire (10).

5. Dispositif de coupe pour fruits et légumes selon la revendication 1, dans lequel lesdites première et seconde extensions de verrouillage (11, 12) sont sensiblement de même forme, ladite ouverture de récipient est de forme quadrilatérale.

6. Dispositif de coupe pour fruits et légumes selon la revendication 1, dans lequel un élément convexe de forme annulaire de couvercle (22) adapté pour être reçu par une paroi interne de ladite ouverture de récipient s'étend à partir d'un côté dudit couvercle (2) vers ledit récipient (1), ledit élément convexe de forme annulaire (22) comprend une région concave qui est dans la position correspondant à la position dudit crochet de verrouillage (21).

7. Dispositif de coupe pour fruits et légumes selon la revendication 3, dans lequel ledit élément élastique (42) a une forme d'arc, deux extrémités dudit élément élastique (42) sont montées sur ledit couvercle (2), la partie centrale dudit élément élastique (42) se projetant vers la paroi externe dudit récipient (1) est montée sur ledit élément coulissant (41).

8. Dispositif de coupe pour fruits et légumes selon la revendication 2, dans lequel une partie dudit élément coulissant (41) qui s'étend le long dudit couvercle (2) forme une extension d'élément coulissant (411), ladite extension d'élément coulissant (411) est adaptée pour recevoir et être montée sur une partie centrale dudit élément élastique (42).

9. Dispositif de coupe pour fruits et légumes selon la revendication 8, dans lequel une partie dudit élément coulissant (41) qui s'étend le long dudit couvercle (2) forme deux crochets de verrouillage coulissants opposés, deux éléments de réception de crochet de verrouillage coulissant longitudinaux adaptés pour recevoir lesdits deux crochets de verrouillage coulissants opposés (412) sont montés sur ledit couvercle (2), ledit crochet de verrouillage coulissant est monté de manière coulissante à l'intérieur dudit élément de réception de crochet de verrouillage coulissant longitudinal.

10. Dispositif de coupe pour fruits et légumes selon la revendication 2, dans lequel une partie dudit élément coulissant (41) qui s'étend vers la paroi externe dudit récipient (2) forme un élément de position de verrouillage (413) qui est monté sur un côté de ladite seconde extension de verrouillage distal par rapport audit couvercle (2).

11. Dispositif de coupe pour fruits et légumes selon la revendication 10, dans lequel une partie dudit élément de position de verrouillage (413) qui s'étend vers ledit couvercle forme un élément d'extension de verrouillage (414), ledit élément d'extension de verrouillage (414) comprend une surface inclinée adaptée pour recevoir ladite seconde extension de verrouillage (12), ladite surface inclinée est disposée entre ledit élément coulissant (41) et ledit couvercle (2).

12. Dispositif de coupe pour fruits et légumes selon la revendication 2, dans lequel lesdites première et seconde extensions de verrouillage (11, 12) sont disposées axialement dans une position sensiblement opposée dudit récipient (1).

13. Dispositif de coupe pour fruits et légumes selon la revendication 1, dans lequel ledit couvercle (2) comprend une pluralité d'ouvertures, une partie centrale dudit élément élastique (42) comprend un élément de sollicitation convexe.

14. Dispositif de coupe pour fruits et légumes selon la revendication 1, dans lequel ledit élément élastique (42) comprend de l'acétal.

15. Dispositif de coupe pour fruits et légumes selon la revendication 1, dans lequel ledit élément coulissant (41) comprend un élément de position de coulissement adapté pour commander la direction de mouvement dudit élément coulissant (41) le long d'une surface dudit couvercle (2), un élément de réception d'élément de position de coulissement est disposé sur une surface dudit élément coulissant (41) correspondant audit couvercle (2), ledit élément de position de coulissement est adapté pour se déplacer le long dudit élément de réception d'élément de position de coulissement.
